# EUROPEAN PATENT APPLICATION

(11) **EP 4 848 635 A1**
(43) Date of publication of application: **02.12.2026**
(21) Application number: 24919191.7
(22) Date of filing: 22.01.2024
(51) Int. Cl.: H04L 5/00

(54) **METHOD AND APPARATUS FOR TRANSMITTING SOUNDING REFERENCE SIGNAL, AND METHOD AND APPARATUS FOR RECEIVING SOUNDING REFERENCE SIGNAL**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); ZHANG, Jian, Beijing 100022 (CN); JIN, Liqiang, Beijing 100022 (CN); ZHAO, Di, Beijing 100022 (CN); LU, Yiwen, Beijing 100022 (CN); ZHANG, Qun, Beijing 100022 (CN)
(74) Representative: Haseltine Lake Kempner LLP
(86) International application number: PCT/CN2024/073437
(87) International publication number: WO 2025/156072

(57) **Abstract**

Embodiments of the present application provide a method and an apparatus for transmitting and receiving a sounding reference signal (SRS). The method for transmitting SRS includes: a terminal equipment receives configuration information from a network device, wherein the configuration information is used to configure the terminal equipment to perform 3-port SRS transmission; and the terminal equipment transmits an SRS using three ports according to the configuration information.

## Description

### TECHNICAL FIELD

Embodiments of the present application relate to the field of communications technologies.

### BACKGROUND

In a New Radio (NR) system, codebook based uplink transmission, such as Physical Uplink Shared Channel (PUSCH) transmission, is supported. PUSCH transmission can use a single port, two ports, four ports, or eight ports. In order to support codebook based transmission, Sounding Reference Signal (SRS) is also configured with a single port, two ports, four ports, or eight ports accordingly.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventors find that a current codebook based uplink transmission does not support UE with 3Tx, i.e., does not support 3-port SRS transmission. There is currently no definitive solution for 3-port SRS transmission.

To address at least one of the above problems, embodiments of the present application provide a method and an apparatus for transmitting and receiving a sounding reference signal (SRS).

According to an aspect of embodiments of the present application, there is provided a method for transmitting a sounding reference signal (SRS), including:
receiving, by a terminal equipment, configuration information from a network device, wherein the configuration information is used to configure the terminal equipment to perform 3-port SRS transmission; and
transmitting, by the terminal equipment, an SRS using three ports according to the configuration information.

According to another aspect of the embodiments of the present application, there is provided an apparatus for transmitting a sounding reference signal (SRS), including:
a receiving unit configured to receive configuration information from a network device, wherein the configuration information is used to configure the terminal equipment to perform 3-port SRS transmission; and
a transmitting unit configured to transmit an SRS using three ports according to the configuration information.

According to another aspect of the embodiments of the present application, there is provided a method for receiving a sounding reference signal (SRS), including:
transmitting, by a network device, configuration information to a terminal equipment, wherein the configuration information is used to configure the terminal equipment to perform 3-port SRS transmission; and
receiving, by the network device, an SRS transmitted by the terminal equipment using three ports.

According to another aspect of the embodiments of the present application, there is provided an apparatus for receiving a sounding reference signal (SRS), including:
a transmitting unit configured to transmit configuration information to a terminal equipment, wherein the configuration information is used to configure the terminal equipment to perform 3-port SRS transmission; and
a receiving unit configured to receive an SRS transmitted by the terminal equipment using three ports.

According to another aspect of the embodiments of the present application, there is provided a communication system, including:
a network device configured to transmit configuration information to a terminal equipment, wherein the configuration information is used to configure the terminal equipment to perform 3-port SRS transmission; and
the terminal equipment configured to transmit an SRS using three ports according to the configuration information.

One of the beneficial effects of the embodiments of the present application is that the terminal equipment receives configuration information from the network device, wherein the configuration information is used to configure the terminal equipment to perform 3-port SRS transmission, and transmits the SRS using three ports according to the configuration information, thereby being able to improve the performance and efficiency of SRS transmission.

With reference to the specification and drawings below, a specific embodiment of the present application is disclosed in detail, which specifies the manner in which the principle of the present application may be adopted. It should be understood that, the scope of the embodiments of the present application is not limited. Within the scope of the spirit and clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a method for transmitting a sounding reference signal (SRS) in the embodiments of the present application;
FIG. 3 is an example diagram of 3T6R operation in embodiments of the present application;
FIG. 4 is a schematic diagram of a method for receiving a sounding reference signal (SRS) in embodiments of the present application;
FIG. 5 is a schematic diagram of an apparatus for transmitting a sounding reference signal (SRS) in embodiments of the present application;
FIG. 6 is a schematic diagram of an apparatus for receiving a sounding reference signal (SRS) in embodiments of the present application;
FIG. 7 is a schematic diagram of a terminal equipment in embodiments of the present application; and
FIG. 8 is a schematic diagram of a network device in embodiment of the present application.

### DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" can refer to a base station and/or its coverage area, depending on the context in which the term is used.

In embodiments of this disclosure, the term "user equipment (UE)" or "terminal equipment (TE)" refers to, for example, an equipment accessing to a communication network and receiving network services via a network device, and may also be referred to as. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

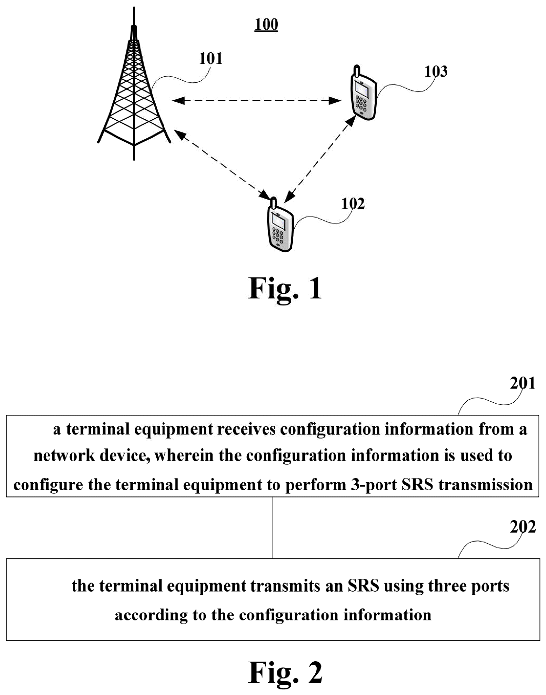

FIG. 1 is a schematic diagram of a communication system in embodiments of the present application, illustrating a case of a terminal equipment and a network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In the embodiments of the present application, existing services or services that may be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within a coverage of the network device 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In embodiments of the present application, a higher layer signaling may be, for example, Radio Resource Control (RRC) signaling; for example, it is called an RRC message, e.g., including MIB, system information, and a dedicated RRC message; or it is referred to as RRC information element (RRC IE). For example, the higher layer signaling may also be Medium Access Control (MAC) signaling; or is also called MAC control element (MAC CE). However, the present application is not limited to this.

In the following explanation, without causing confusion, the terms "PUCCH" and "physical uplink control channel" or "uplink control information" are used interchangeably, and the terms "PUSCH" and "physical uplink data channel" or "uplink data" are also used interchangeably. In addition, transmitting or receiving a PUSCH may be understood as transmitting or receiving uplink data carried by the PUSCH. In addition, the terms "transmission" and "transmitting" may be used interchangeably.

### Embodiments of a First Aspect

The embodiments of the present application provide a method for transmitting a sounding reference signal (SRS), explained from a terminal equipment side.

FIG. 2 is a schematic diagram of a method for transmitting a sounding reference signal (SRS) in embodiments of the present application, as shown in FIG. 2, the method including:
201: a terminal equipment receives configuration information from a network device, wherein the configuration information is used to configure the terminal equipment to perform 3-port SRS transmission; and
202: the terminal equipment transmits an SRS using three ports according to the configuration information.

It is worth noting that FIG. 2 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 2 above.

In some embodiments, a 4-port sounding reference signal (SRS) resource is reused; and one port in the 4-port SRS resource is not used for 3-port transmission, and SRS transmission power is equally split over three ports used for the 3-port transmission across the 4-port SRS resource.

For example, for a UE with 3Tx, the SRS resource with four ports are reused, and one port is not used for the 3-port transmission (e.g., referred to as being skipped). Which port is not used for the 3-port transmission may be configured and/or indicated by a network device. The SRS transmission power is equally split over the three ports used.

In some embodiments, a 2-port SRS resource and a single-port SRS resource are bundled for 3-port transmission, and if the bundled SRS resources are over a same OFDM symbol, the SRS transmission power is equally split over the three ports used for the 3-port transmission across the bundled SRS resources.

For example, for a UE with 3Tx, if a 3-port SRS operation is via the bundled SRS resources including one 2-port SRS resource and one single-port SRS resource, transmission power splitting among the SRS ports should be defined. For example, if the bundled SRS resources are over the same OFDM symbol, the transmission power for SRS is equally split over three SRS ports across the bundled SRS resources.

In some embodiments, a 2-port SRS resource and a single-port SRS resource are bundled for 3-port transmission, and if the bundled SRS resources are over different OFDM symbols, the SRS transmission power is equally split over the three ports used for the 3-port transmission across the bundled SRS resources.

For example, if the bundled SRS resources are over different OFDM symbols, the transmission power for SRS should be equally split over three SRS ports across the bundled SRS resources.

In some embodiments, a 2-port SRS resource and a single-port SRS resource are bundled for 3-port transmission, and if the bundled SRS resources are over different OFDM symbols, the SRS transmission power is the same over three ports used for the 3-port transmission and power for each port is determined by the 2-port SRS resource.

For example, if the bundled SRS resources are over different OFDM symbols, the transmission power for SRS over the three SRS ports across the bundled SRS resources should be equal, and the power for each port is determined by equally splitting the transmission power over two antenna ports, i.e., the power for each port is determined by the two-port SRS resource. For another example, the transmission power for SRS over the three SRS ports across the bundled SRS resources should be equal, and the power for each port is determined by the single-port SRS resource.

In some embodiments, a 2-port SRS resource and a single-port SRS resource are bundled for 3-port transmission, and if the bundled SRS resources are over different OFDM symbols, the SRS transmission power is determined according to respective OFDM symbols.

For example, if the bundled SRS resources are over different OFDM symbols, the transmission power may be determined symbol by symbol. In the OFDM symbol carrying the two-port SRS resource, the transmission power for SRS is equally split over two antenna ports. In the OFDM symbol carrying the single-port SRS resource, the transmission power for SRS is allocated over one antenna port, i.e., being not split.

In some embodiments, three single-port SRS resources are bundled for 3-port transmission, and if the bundled SRS resources are over a same OFDM symbol, the SRS transmission power is equally split over the three ports used for the 3-port transmission across the bundled SRS resources.

For example, for a UE with 3Tx, if a 3-port SRS operation is via the bundled SRS resources including three single-port SRS resources, transmission power splitting among the SRS ports should be defined. For example, if the bundled SRS resources are over the same OFDM symbol, the transmission power for SRS is equally split over three SRS ports across the bundled SRS resources.

In some embodiments, three single-port SRS resources are bundled for 3-port transmission, and if the bundled SRS resources are over different OFDM symbols, the SRS transmission power is equally split over the three ports used for the 3-port transmission across the bundled SRS resources.

For example, if the bundled SRS resources are over different OFDM symbols, the transmission power for SRS is equally split over three SRS ports across the bundled SRS resources.

In some embodiments, three single-port SRS resources are bundled for 3-port transmission, and if the bundled SRS resources are over different OFDM symbols, the SRS transmission power is determined according to respective OFDM symbols.

For example, if the bundled SRS resources are over different OFDM symbols, the transmission power may be determined symbol by symbol. The transmission power for SRS over different symbols might be the same, or the transmission power for SRS over different symbols might be different.

SRS power control has been explained hereinabove, and SRS antenna switching will be explained hereinbelow.

In some embodiments, at least one of the following configurations is supported for SRS antenna switching operation: 3Tx3Rx (3T3R), 3Tx4Rx (3T4R), 3Tx6Rx (3T6R), 3Tx8Rx (3T8R).

In some embodiments, a 4-port SRS resource is configured, and one port in the 4-port SRS resource is not used for 3-port transmission, SRS resource configuration is predefined for SRS antenna switching with 3 Tx.

For example, in the SRS resource configuration, for 3Tx3Rx, one 4-port SRS resource is configured and one port is skipped; for 3Tx4Rx, two 4-port SRS resources are configured and one port in each SRS resource is skipped, or one 4-port SRS resource and one single-port SRS resource are configured and one port in the 4-port SRS resource is skipped; for 3Tx6Rx, two 4-port SRS resources are configured and one port in each SRS resource is skipped; for 3Tx8Rx, three 4-port SRS resources are configured and one port in each SRS resource is skipped, or two 4-port SRS resources and one single-port SRS resource are configured and one port in the 4-port SRS resource is skipped.

Table 1 shows an example of SRS configuration for antenna switching with 3Tx. For example, for a UE with 3Tx, if a 4-port SRS resource is configured and one port is skipped for transmission, one example of SRS resource configuration shown in Table 1 may be applied to SRS antenna switching with 3Tx.

**Table 1 SRS configuration for antenna switching with 3Tx**

| *xTyR* | *Number of SRS resources* | *Number of SRS resource sets* |
|---|---|---|
| 3T3R | One 4-port SRS resource and one port is skipped | one |
| 3T4R | Two 4-port SRS resources. For each SRS resource, one port is skipped, or, | One (or, one or two) |
| | One 4-port SRS resource and one single-port SRS resource. For the 4-port SRS resource, one port is skipped. | |
| 3T6R | Two 4-port SRS resources. For each SRS resource, one port is skipped. | One (or, one or two) |
| 3T8R | Three 4-port SRS resources. For each SRS resource, one port is skipped, or, | One (or, one or two or three) |
| | Two 4-port RS resources and one 2-port SRS resource. And for each 4-port SRS resource, one port is skipped. | |

In some embodiments, SRS resources are bundled for 3-port transmission by using time division multiplexing (TDM), and SRS resource configuration is predefined for SRS antenna switching with 3Tx.

For example, in the SRS resource configuration, for 3Tx3Rx, one 2-port SRS resource and one single-port SRS resource are configured; for 3Tx4Rx, two 2-port SRS resources and two single-port SRS resources are configured, or one 2-port SRS resource and two single-port SRS resources are configured; for 3Tx6Rx, two 2-port SRS resources and two single-port SRS resources are configured; for 3Tx8Rx, three 2-port SRS resources and three single-port SRS resources are configured, or two 2-port SRS resources and two single-port SRS resources as well as another 2-port SRS resource are configured.

Table 2 shows an example of SRS configuration for antenna switching with 3Tx. For example, for a UE with 3Tx, if the 3-port SRS operation is via bundled SRS resources in TDMed manner (for example, one 2-port SRS resource plus one single-port SRS resource over a different OFDM symbol), then one example of the SRS resource configuration as shown in Table 2 may be applied for SRS antenna switching with 3Tx.

**Table 2 SRS configuration for antenna switching with 3Tx via bundled SRS resource in TDMed manner**

| *xTyR* | *Number of SRS resources* | *Number of SRS resource sets* |
|---|---|---|
| 3T3R | Two SRS resources, including one 2-port SRS resource and one single-port SRS resource | one |
| 3T4R | Four SRS resources, including two 2-port SRS resources and two single-port SRS resources, or, three SRS resources, including one 2-port SRS resource and two single-port SRS resources, wherein one 2-port SRS resource and one single-port SRS resource are bundled for 3-port SRS operation | One (or, one or two) |
| 3T6R | Four SRS resources, including two 2-port SRS resources and two single-port SRS resources | One (or, one or two) |
| 3T8R | Six SRS resources, including three 2-port SRS resources and three single-port SRS resources, or, five SRS resources, including two 2-port SRS resources and two single-port SRS resources, as well as one additional 2-port SRS resource | One (or, one or two or three) |

In some embodiments, the bundled SRS resources for 3-port transmission are used as one group; within the group, the SRS resources are over two consecutive OFDM symbols, and a gap symbol is configured between the two groups.

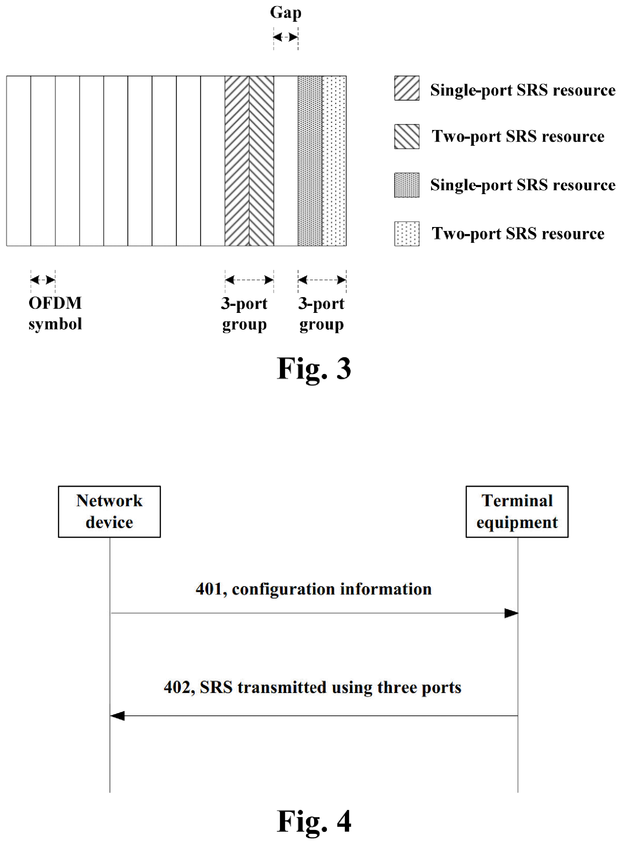

FIG. 3 is an example diagram of 3T6R operation in embodiments of the present application. As shown in FIG. 3, the bundled SRS resources used for 3-port transmission may be defined as one group, that is, a 2-port SRS resource plus a single-port SRS resource is one group. Within one group, the 2-port SRS resource and the single-port SRS resource are over two consecutive OFDM symbols, i.e., there is no gap symbol. A gap symbol is configured between two groups.

In some embodiments, the SRS resources are bundled for 3-port transmission by using frequency division multiplexing (FDM), or the bundled SRS resources occupy a same resource element (RE) by using different cyclic shifts over the same OFDM symbol, the SRS resource configuration is predefined for SRS antenna switching with 3Tx.

For example, in the SRS resource configuration, for 3Tx3Rx, one 2-port SRS resource and one single-port SRS resource are configured; for 3Tx4Rx, two 2-port SRS resources and two single-port SRS resources are configured, or one 2-port SRS resource and two single-port SRS resources are configured; for 3Tx6Rx, two 2-port SRS resources and two single-port SRS resources are configured; for 3Tx8Rx, three 2-port SRS resources and three single-port SRS resources are configured, or two 2-port SRS resources and two single-port SRS resources as well as another 2-port SRS resource are configured.

Table 2 shows an example of SRS configuration for antenna switching with 3Tx. For example, for a UE with 3Tx, if the 3-port SRS operation is via bundled SRS resources in FDMed manner (for example, one 2-port SRS resource plus one single-port SRS resource over comb offset in the same OFDM symbol), or if the bundled SRS resources occupy the same RE by using different cyclic shifts in the same OFDM symbol, then one example of the SRS resource configuration as shown in Table 3 may be applied for SRS antenna switching with 3Tx.

**Table 3 SRS configuration for antenna switching with 3Tx via bundled SRS resource**

| *xTyR* | *Number of SRS resources* | *Number of SRS resource sets* |
|---|---|---|
| 3T3R | Two SRS resources, including one 2-port SRS resource and one single-port SRS resource | one |
| 3T4R | Four SRS resources, including two 2-port SRS resources and two single-port SRS resources, or, three SRS resources, including one 2-port SRS resource and two single-port SRS resources, wherein one 2-port SRS resource and one single-port SRS resource are bundled for 3-port SRS operation | One (or, one or two) |
| 3T6R | Four SRS resources, including two 2-port SRS resources and two single-port SRS resources | One (or, one or two) |
| 3T8R | Six SRS resources, including three 2-port SRS resources and three single-port SRS resources, or, five SRS resources, including two 2-port SRS resources and two single-port SRS resources, as well as one additional 2-port SRS resource | One (or, one or two or three) |

In some embodiments, the bundled SRS resources for 3-port transmission are used as one group; within the group, the SRS resources are over the same one OFDM symbol, and a gap symbol is configured between the two groups.

For example, the bundled SRS resources used for 3-port transmission may be defined as one group, and for example, a 2-port SRS resource plus a single-port SRS resource is one group. Within one group, the 2-port SRS resource and the single-port SRS resource are over the same OFDM symbol. A gap symbol is configured between two groups.

In the embodiments of the present application, SRS transmission power splitting is defined for 3-port SRS, and in addition, SRS antenna switching considering 3Tx UE is defined.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that the terminal equipment receives configuration information from the network device, wherein the configuration information is used to configure the terminal equipment to perform 3-port SRS transmission, and transmits the SRS using three ports according to the configuration information, thereby being able to improve the performance and efficiency of SRS transmission.

### Embodiments of a Second Aspect

The embodiments of the present application provide a method for receiving a sounding reference signal (SRS), explained from a network device side. The embodiments of the second aspect may be combined with the embodiments of the first aspect, and the same content as the embodiments of the first aspect will not be repeated.

FIG. 4 is another schematic diagram of a method for receiving a sounding reference signal (SRS) in embodiments of the present application, as shown in FIG. 4, the method including:
401: a network device transmits configuration information to a terminal equipment, wherein the configuration information is used to configure the terminal equipment to perform 3-port SRS transmission; and
402: the network device receives an SRS transmitted by the terminal equipment using three ports.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that the terminal equipment receives configuration information from the network device, wherein the configuration information is used to configure the terminal equipment to perform 3-port SRS transmission, and transmits the SRS using three ports according to the configuration information, thereby being able to improve the performance and efficiency of SRS transmission.

### Embodiments of a Third Aspect

The embodiments of the present application provide an apparatus for transmitting a sounding reference signal (SRS). The apparatus may be, for example, a terminal equipment, or one or more parts or components configured in the terminal equipment, and the same content as the embodiment of the first and second aspects will not be repeated.

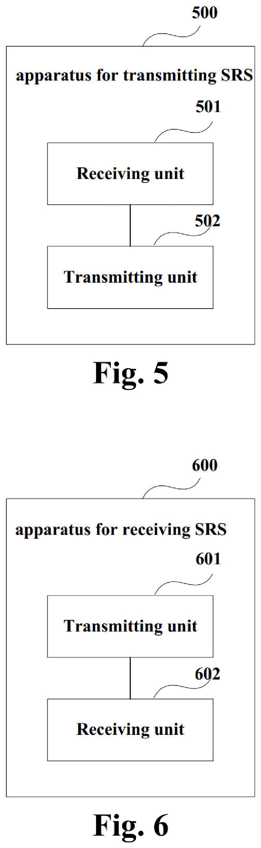

FIG. 5 is a schematic diagram of an apparatus for transmitting a sounding reference signal (SRS) in embodiments of the present application, as shown in FIG. 5, an apparatus 500 for transmitting a sounding reference signal (SRS) in the embodiments of the present application including:
a receiving unit 501 configured to receive configuration information from a network device, wherein the configuration information is used to configure the terminal equipment to perform 3-port SRS transmission; and
a transmitting unit 502 configured to transmit an SRS using three ports according to the configuration information.

In some embodiments, a 4-port SRS resource is configured, and one port in the 4-port SRS resource is not used for 3-port transmission, and SRS transmission power is equally split over three ports used for the 3-port transmission across the 4-port SRS resource.

In some embodiments, a 2-port SRS resource and a single-port SRS resource are bundled for 3-port transmission, and if the bundled SRS resources are over a same OFDM symbol, the SRS transmission power is equally split over the three ports used for the 3-port transmission across the bundled SRS resources.

In some embodiments, a 2-port SRS resource and a single-port SRS resource are bundled for 3-port transmission, if the bundled SRS resources are over different OFDM symbols, SRS transmission power is equally split over three ports for the 3-port transmission across the bundled SRS resources, or the SRS transmission power is the same over three ports used for the 3-port transmission and power for each port is determined by the 2-port SRS resource, or the SRS transmission power is determined according to respective OFDM symbols.

In some embodiments, three single-port SRS resources are bundled for 3-port transmission, and if the bundled SRS resources are over a same OFDM symbol, the SRS transmission power is equally split over the three ports used for the 3-port transmission across the bundled SRS resources.

In some embodiments, three single-port SRS resources are bundled for 3-port transmission, and if the bundled SRS resources are over different OFDM symbols, the SRS transmission power is equally split over the three ports used for the 3-port transmission across the bundled SRS resources, or the SRS transmission power is determined according to respective OFDM symbols.

In some embodiments, at least one of the following configurations is supported for SRS antenna switching operation: 3Tx3Rx, 3Tx4Rx, 3Tx6Rx, 3Tx8Rx.

In some embodiments, a 4-port SRS resource is configured, and one port in the 4-port SRS resource is not used for 3-port transmission, SRS resource configuration is predefined for SRS antenna switching with 3Tx.

In some embodiments, in the SRS resource configuration,
for 3Tx3Rx, one 4-port SRS resource is configured and one port is skipped;
for 3Tx4Rx, two 4-port SRS resources are configured and one port in each SRS resource is skipped, or one 4-port SRS resource and one single-port SRS resource are configured and one port in the 4-port SRS resource is skipped;
for 3Tx6Rx, two 4-port SRS resources are configured and one port in each SRS resource is skipped;
for 3Tx8Rx, three 4-port SRS resources are configured and one port in each SRS resource is skipped, or two 4-port SRS resources and one single-port SRS resource are configured and one port in the 4-port SRS resource is skipped.

In some embodiments, SRS resources are bundled for 3-port transmission by using time division multiplexing (TDM), and SRS resource configuration is predefined for SRS antenna switching with 3Tx.

In some embodiments, in the SRS resource configuration,
for 3Tx3Rx, one 2-port SRS resource and one single-port SRS resource are configured;
for 3Tx4Rx, two 2-port SRS resources and two single-port SRS resources are configured, or one 2-port SRS resource and two single-port SRS resources are configured;
for 3Tx6Rx, two 2-port SRS resources and two single-port SRS resources are configured;
for 3Tx8Rx, three 2-port SRS resources and three single-port SRS resources are configured, or two 2-port SRS resources and two single-port SRS resources as well as another 2-port SRS resource are configured.

In some embodiments, the bundled SRS resources for 3-port transmission are used as one group; within the group, the SRS resources are over two consecutive OFDM symbols, and a gap symbol is configured between the two groups.

In some embodiments, the SRS resources are bundled for 3-port transmission by using frequency division multiplexing (FDM), or the bundled SRS resources occupy a same resource element (RE) by using different cyclic shifts over the same OFDM symbol, the SRS resource configuration is predefined for SRS antenna switching with 3Tx.

In some embodiments, in the SRS resource configuration,
for 3Tx3Rx, one 2-port SRS resource and one single-port SRS resource are configured;
for 3Tx4Rx, two 2-port SRS resources and two single-port SRS resources are configured, or one 2-port SRS resource and two single-port SRS resources are configured;
for 3Tx6Rx, two 2-port SRS resources and two single-port SRS resources are configured;
for 3Tx8Rx, three 2-port SRS resources and three single-port SRS resources are configured, or two 2-port SRS resources and two single-port SRS resources as well as another 2-port SRS resource are configured.

In some embodiments, the bundled SRS resources for 3-port transmission are used as one group; within the group, the SRS resources are over the same one OFDM symbol, and a gap symbol is configured between the two groups.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the parts or modules related to the present application are illustrated hereinbefore, but the present application is not limited to this. The apparatus 500 for transmitting a sounding reference signal (SRS) may further include other parts or modules, and the details of these parts or modules can be seen by referring to the related art.

In addition, for the sake of simplicity, FIG. 5 only illustratively shows the connection relationship or signal trend between the individual parts or modules, but it should be clear to those skilled in the art that various related techniques such as bus connections may be employed. The above individual parts or modules can be implemented by hardware facilities such as a processor, a memory, a transmitter, a receiver, etc., which is not limited in the present application.

It can be seen from the above embodiments that the terminal equipment receives configuration information from the network device, wherein the configuration information is used to configure the terminal equipment to perform 3-port SRS transmission, and transmits the SRS using three ports according to the configuration information, thereby being able to improve the performance and efficiency of SRS transmission.

### Embodiments of a Fourth Aspect

The embodiments of the present application provide an apparatus for receiving a sounding reference signal (SRS). The apparatus may be, for example, a network device, or one or more parts or components configured in the network device, and the same content as the embodiments of the first to third aspects will not be repeated.

FIG. 6 is another schematic diagram of an apparatus for receiving a sounding reference signal (SRS) in the embodiments of the present application, as shown in FIG. 6, an apparatus 600 for receiving a sounding reference signal (SRS) in the embodiments of the present application including:
a transmitting unit 601 configured to transmit configuration information to a terminal equipment, wherein the configuration information is used to configure the terminal equipment to perform 3-port SRS transmission; and
a receiving unit 602 configured to receive an SRS transmitted by the terminal equipment using three ports.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the parts or modules related to the present application are illustrated hereinbefore, but the present application is not limited to this. The apparatus 600 for receiving a sounding reference signal (SRS) may further include other parts or modules, and the details of these parts or modules can be seen by referring to the related art.

In addition, for the sake of simplicity, FIG. 6 only illustratively shows the connection relationship or signal trend between the individual parts or modules, but it should be clear to those skilled in the art that various related techniques such as bus connections may be employed. The above individual parts or modules can be implemented by hardware facilities such as a processor, a memory, a transmitter, a receiver, etc., which is not limited in the present application.

It can be seen from the above embodiments that the terminal equipment receives configuration information from the network device, wherein the configuration information is used to configure the terminal equipment to perform 3-port SRS transmission, and transmits the SRS using three ports according to the configuration information, thereby being able to improve the performance and efficiency of SRS transmission.

### Embodiments of a Fifth Aspect

The embodiments of the present application further provide a communication system, referring to FIG. 1, the same content as the embodiments in the first to fourth aspects will not be repeated.

In some embodiments, the communication system 100 may at least include:
a network device configured to transmit configuration information to a terminal equipment, wherein the configuration information is used to configure the terminal equipment to perform 3-port SRS transmission; and
the terminal equipment configured to transmit an SRS using three ports according to the configuration information.

The embodiments of the present application further provide a terminal equipment, but which is not limited in the present application, and may also be other devices.

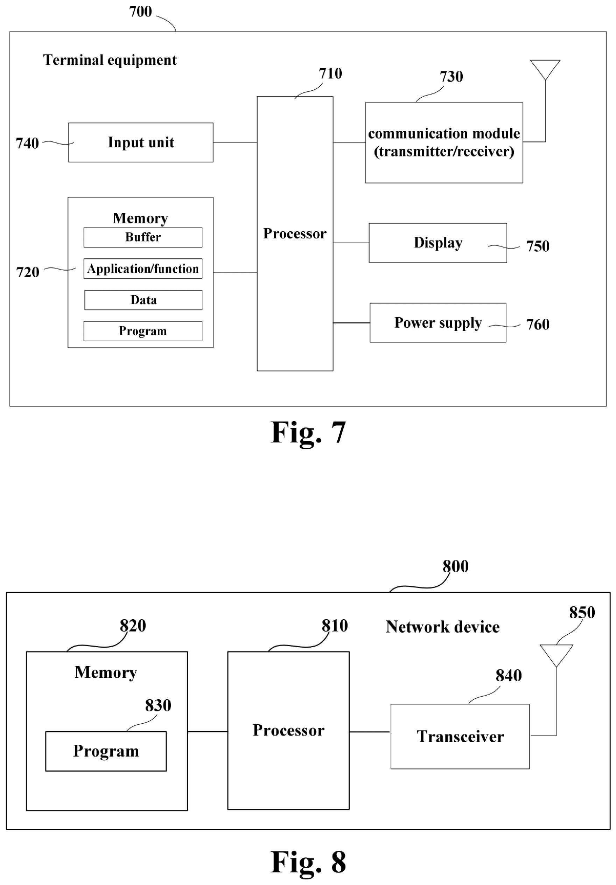

FIG. 7 is a schematic diagram of a terminal equipment in the embodiments of the present application. As shown in FIG. 7, a terminal equipment 700 may include a processor 710 and a memory 720; the memory 720 stores data and program, and is coupled to the processor 710. It is worth noting that this figure is exemplary; other types of structures may also be used in addition to or instead of the structure to implement telecommunications functions or other functions.

For example, the processor 710 may be configured to execute the program to implement the method for transmitting a sounding reference signal (SRS) as described in the embodiments of the first aspect. For example, the processor 710 may be configured to perform the following controls of: receiving configuration information from a network device, wherein the configuration information is used to configure the terminal equipment to perform 3-port SRS transmission; and transmitting an SRS using 3 ports according to the configuration information.

As shown in FIG. 7, the terminal equipment 700 may further include a communication module 730, an input unit 740, a display 750, and a power supply 760. The functions of the above parts are similar to the relevant art, and will not be repeated here. It is worth noting that the terminal equipment 700 is not necessarily required to include all of the parts shown in FIG. 7, and the above parts are not essential; in addition, the terminal equipment 700 may further include parts not shown in FIG. 7, with reference to the relevant art.

The embodiments of the present application further provide a network device, which may be, for example, a base station, but which is not limited in the present application, and may also be other network devices.

FIG. 8 is a schematic diagram of composition of the network device in the embodiments of the present application. As shown in FIG. 8, a network device 800 may include a processor 810 (such as a central processing unit (CPU)) and a memory 820; the memory 820 is coupled to the processor 810. The memory 820 may store various data and also may store a program 830 for information processing, and the program 830 is executed under the control of the processor 810.

For example, the processor 810 may be configured to execute the program to implement the method for receiving a sounding reference signal (SRS) as described in the embodiments of the second aspect. For example, the processor 810 may be configured to perform the following controls of: transmitting configuration information to a terminal equipment, wherein the configuration information is used to configure the terminal equipment to perform 3-port SRS transmission; and receiving an SRS transmitted by the terminal equipment using three ports.

In addition, as shown in FIG. 8, the network device 800 may further include: a transceiver 840 and an antenna 850, etc., wherein the functionalities of the above parts are similar to the related art, and will not be repeated here. It is worth noting that the network device 800 is not necessarily required to include all of the parts shown in FIG. 8; in addition, the network device 800 may further include parts not shown in FIG. 8, with reference to the related art.

The embodiments of the present application further provide a computer program which, when being executed in the terminal equipment, causes the terminal equipment to execute the method for transmitting a sounding reference signal (SRS) described in the embodiments of the first aspect.

The embodiments of the present application further provide a storage medium storing a computer program which causes the terminal equipment to execute the method for transmitting a sounding reference signal (SRS) described in the embodiments of the first aspect.

The embodiments of the present application further provide a computer program which, when being executed in the network device, causes the network device to execute the method for receiving a sounding reference signal (SRS) described in the embodiments of the second aspect.

The embodiments of the present application further provide a storage medium storing a computer program which causes the network device to execute the method for receiving a sounding reference signal (SRS) described in the embodiments of the second aspect.

The above apparatuses and methods of the present application can be implemented by hardware or by hardware combined with software. The present application relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware assembly, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A method for transmitting a sounding reference signal (SRS), including:
   receiving, by a terminal equipment, configuration information from a network device, wherein the configuration information is used to configure the terminal equipment to perform 3-port SRS transmission; and
   transmitting, by the terminal equipment, an SRS using three ports according to the configuration information.
2. A method for receiving a sounding reference signal (SRS), including:
   transmitting, by a network device, configuration information to a terminal equipment, wherein the configuration information is used to configure the terminal equipment to perform 3-port SRS transmission; and
   receiving, by the network device, an SRS transmitted by the terminal equipment using three ports.
3. A terminal equipment including a memory storing a computer program and a processor configured to execute the computer program to implement the method for transmitting a sounding reference signal (SRS) according to the supplement 1.
4. A network device including a memory storing a computer program and a processor configured to execute the computer program to implement the method for receiving a sounding reference signal (SRS) according to the supplement 2.
5. A computer program product including at least a computer program which, when being executed by a processor, causes a terminal equipment to execute the method for transmitting a sounding reference signal (SRS) according to the supplement 1.
6. A computer program product including at least a computer program which, when being executed by a processor, causes a network device to execute the method for receiving a sounding reference signal (SRS) according to the supplement 2.

## Claims

1. An apparatus for transmitting a sounding reference signal, comprising:
a receiving unit configured to receive configuration information from a network device, wherein the configuration information is used to configure a terminal equipment to perform 3-port sounding reference signal transmission; and
a transmitting unit configured to transmit a sounding reference signal using three ports according to the configuration information.

2. The apparatus according to claim 1, wherein a 4-port sounding reference signal resource is configured, and one port in the 4-port sounding reference signal resource is not used for 3-port transmission, sounding reference signal transmission power is equally split over three ports for the 3-port transmission across the 4-port sounding reference signal resource.

3. The apparatus according to claim 1, wherein a 2-port sounding reference signal resource and a single-port sounding reference signal resource are bundled for 3-port transmission, and if the bundled sounding reference signal resources are over the same OFDM symbol, sounding reference signal transmission power is equally split over three ports for the 3-port transmission across the bundled sounding reference signal resources.

4. The apparatus according to claim 1, wherein a 2-port sounding reference signal resource and a single-port sounding reference signal resource are bundled for 3-port transmission, and if the bundled sounding reference signal resources are over different OFDM symbols, sounding reference signal transmission power is equally split over three ports for the 3-port transmission across the bundled sounding reference signal resources, or, sounding reference signal transmission power is the same over three ports for the 3-port transmission and power for each port is determined by the 2-port sounding reference signal resource, or, sounding reference signal transmission power is determined according to respective OFDM symbols.

5. The apparatus according to claim 1, wherein three single-port sounding reference signal resources are bundled for 3-port transmission, and if the bundled sounding reference signal resources are over the same OFDM symbol, sounding reference signal transmission power is equally split over three ports for the 3-port transmission across the bundled sounding reference signal resources.

6. The apparatus according to claim 1, wherein three single-port sounding reference signal resources are bundled for 3-port transmission, and if the bundled sounding reference signal resources are over different OFDM symbols, sounding reference signal transmission power is equally split over three ports for the 3-port transmission across the bundled sounding reference signal resources, or, sounding reference signal transmission power is determined according to respective OFDM symbols.

7. The apparatus according to claim 1, wherein for a sounding reference signal antenna switching operation, at least one of the following configurations is supported: 3Tx3Rx, 3Tx4Rx, 3Tx6Rx, or 3Tx8Rx.

8. The apparatus according to claim 7, wherein a 4-port sounding reference signal resource is configured, one port in the 4-port sounding reference signal resource is not used for 3-port transmission, and sounding reference signal resource configuration is predefined for sounding reference signal antenna switching with 3Tx.

9. The apparatus according to claim 8, wherein in the sounding reference signal resource configuration,
for 3Tx3Rx, one 4-port sounding reference signal resource is configured and one port is skipped;
for 3Tx4Rx, two 4-port sounding reference signal resources are configured and one port in each sounding reference signal resource is skipped, or, one 4-port sounding reference signal resource and one single-port sounding reference signal resource are configured and one port in the 4-port sounding reference signal resource is skipped;
for 3Tx6Rx, two 4-port sounding reference signal resources are configured and one port in each sounding reference signal resource is skipped; and
for 3Tx8Rx, three 4-port sounding reference signal resources are configured and one port in each sounding reference signal resource is skipped, or, two 4-port sounding reference signal resources and one single-port sounding reference signal resource are configured and one port in the 4-port sounding reference signal resource is skipped.

10. The apparatus according to claim 7, wherein sounding reference signal resources are bundled by using time-division multiplexing for 3-port transmission, and sounding reference signal resource configuration is predefined for sounding reference signal antenna switching with 3Tx.

11. The apparatus according to claim 10, wherein in the sounding reference signal resource configuration,
for 3Tx3Rx, one 2-port sounding reference signal resource and one single-port sounding reference signal resource are configured;
for 3Tx4Rx, two 2-port sounding reference signal resources and two single-port sounding reference signal resources are configured, or, one 2-port sounding reference signal resource and two single-port sounding reference signal resources are configured;
for 3Tx6Rx, two 2-port sounding reference signal resources and two single-port sounding reference signal resources are configured; and
for 3Tx8Rx, three 2-port sounding reference signal resources and three single-port sounding reference signal resources are configured, or, two 2-port sounding reference signal resources, two single-port sounding reference signal resources and another 2-port sounding reference signal resource are configured.

12. The apparatus according to claim 10, wherein the bundled sounding reference signal resources for the 3-port transmission are used as one group; sounding reference signal resources within the group are over two consecutive OFDM symbols, and a gap symbol is configured between two groups.

13. The apparatus according to claim 7, wherein sounding reference signal resources are bundled by using frequency-division multiplexing for 3-port transmission, or bundled sounding reference signal resources occupy the same resource element over the same OFDM symbol by using different cyclic shifts, sounding reference signal resource configuration is predefined for sounding reference signal antenna switching with 3Tx.

14. The apparatus according to claim 13, wherein in the sounding reference signal resource configuration,
for 3Tx3Rx, one 2-port sounding reference signal resource and one single-port sounding reference signal resource are configured;
for 3Tx4Rx, two 2-port sounding reference signal resources and two single-port sounding reference signal resources are configured, or, one 2-port sounding reference signal resource and two single-port sounding reference signal resources are configured;
for 3Tx6Rx, two 2-port sounding reference signal resources and two single-port sounding reference signal resources are configured; and
for 3Tx8Rx, three 2-port sounding reference signal resources and three single-port sounding reference signal resources are configured, or, two 2-port sounding reference signal resources, two single-port sounding reference signal resources and another 2-port sounding reference signal resource are configured.

15. The apparatus according to claim 13, wherein the bundled sounding reference signal resources for the 3-port transmission are used as one group; sounding reference signal resources within the group are over the same OFDM symbol, and a gap symbol is configured between two groups.

16. An apparatus for receiving a sounding reference signal, comprising:
a transmitting unit configured to transmit configuration information to a terminal equipment, wherein the configuration information is used to configure the terminal equipment to perform 3-port sounding reference signal transmission; and
a receiving unit configured to receive a sounding reference signal transmitted by the terminal equipment using three ports.

17. A communication system, comprising:
a network device configured to transmit configuration information to a terminal equipment, wherein the configuration information is used to configure the terminal equipment to perform 3-port sounding reference signal transmission; and
a terminal equipment configured to transmit a sounding reference signal using three ports according to the configuration information.
